# EUROPÄISCHE PATENTSCHRIFT

(11) **EP 0 671 353 B1**
(45) Veröffentlichungstag und Bekanntmachung des Hinweises auf die Patenterteilung: **19.03.1997**
(21) Anmeldenummer: 95101112.1
(22) Anmeldetag: 27.01.1995
(51) Int. Cl.: B65G 69/28

(54) **Überfahrbrücke für Rampen**
Traversing bridge for loading ramps
Passerelle de transbordement pour rampes

(30) Priorität: 10.03.1994 DE 4408069
(43) Veröffentlichungstag der Anmeldung: 13.09.1995
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 096 271
- DE-A- 2 026 274
- DE-A- 2 027 396
- DE-C- 2 800 127
- US-A- 3 235 895

## Beschreibung

Die Erfindung betrifft eine Überfahrbrücke für Rampen mit einer rampenseitig um eine waagerechte Achse an der Rampe schwenkbar gelagerten Brückenplatte mit einer am freien Ende angeordneten, in Brückenlängsrichtung bewegbaren, ein- und ausfahrbaren Verlängerung zur Auflage auf dem zu be- bzw. entladenden Fahrzeug, deren am hinteren Ende befindlicher, im wesentlichen senkrechter Schenkel am vorderen Ende von in einer Vielzahl vorgesehenen, sich längs zur Brücke erstreckenden, einander parallelen, längs bewegbaren Trägern befestigt ist (siehe zum Beispiel die EP-A-0 096 271).

Bei den bekannten Überfahrbrücken dieser Art ist der am hinteren Ende gelegene, im wesentlichen senkrechte Schenkel der Verlängerung als kräftige Platte ausgeführt und unmittelbar stirnseitig mit dem vorderen Ende der erwähnten Träger durch Schweissen fest verbunden. Diese Anordnung und Verbindung des senkrechten Schenkels setzen eine sehr genaue Bearbeitung und Herstellung voraus; Toleranzunterschiede und Verwerfungen sowohl bei der Herstellung als auch während des Brückenbetriebes können nicht mehr ausgeglichen werden. Dadurch kann auch die Verschiebbarkeit der Verlängerung mit den sich nach hinten erstreckenden, vergleichsweise langen Trägern gefährdet werden.

Der Erfindung liegt die Aufgabe zugrunde, die Herstellung der Verlängerung zusammen mit den dahinter befindlichen, einander parallelen Trägern zu vereinfachen und Ausgleichsverformungen während der Herstellung und/oder des Betriebes zu ermöglichen, ohne dabei festigkeitsmässig Nachteile in Kauf nehmen zu müssen.

Zur Lösung dieser Aufgabe umschliesst erfindungsgemäss der senkrechte Schenkel der Verlängerung den unteren Rand einer an der Stirnseite der Träger befestigten senkrechten Platte krallenartig. Somit ist keine unmittelbare Befestigung des senkrechten Schenkels der Verlängerung, sondern eine mittelbare Befestigung des senkrechten Schenkels vorgesehen. Dabei kann der senkrechte Schenkel auch noch den oberen Rand der Platte hakenartig umschliessen. Ist nur eine Hakenverbindung am unteren Ende des senkrechten Schenkels der Verlängerung vorgesehen, so ist es vorteilhaft, wenn dieser Schenkel noch durch eine Verschraubung gehalten ist.

Die erwähnte, an den Stirnflächen der Träger befestigte Platte ist bei von oben wirkenden Kräften steif, bei Normalkräften hingegen vergleichsweise weich. Diese Biegeweichheit ermöglicht Ausgleichsverformungen z.B. bei Toleranzunterschieden, wenn die langen Träger in Vielzahl und in Parallelstellung mit der Platte verbunden werden müssen. Auch können sich derartige Ausgleichsverformungen dann einstellen, wenn Verkantungen oder ähnliche Verformungen beim Brückenbetrieb entstehen sollten, z.B. Schrumpf- oder Expansionsspannungen, oder aber auch durch elastische Verformungen beim Brückenbetrieb entstehende Verwerfungen od. dgl.. Die Hakenverbindung hat zudem noch den grossen Vorteil, dass die Montage der Verlängerung durch Aufschieben quer zur Brückenlängsrichtung erfolgen kann.

Die Erfindung eröffnet auch die Möglichkeit, die Platte - den Trägern entsprechend - aus Stahl zu fertigen, während die Verlängerung mit dem etwa waangerechten, ausladenden Teil und dem etwa senkrechten Schenkel aus Aluminium in Form eines Profilstranges hergestellt werden kann.

Diese Ausbildung der Verlängerung mit ihren Längsträgern macht es ferner möglich, die hintere Lagerung für die Träger wesentlich zu vereinfachen. Zweckmässigerweise wird für diese Lagerung ein sich von einem zum anderen Seitenblech der Brückenplatte erstreckender Stab benutzt, der die Unterzüge der Brückenplatte durchsetzt und seitlich neben der Auflagestelle für die Träger mit aufgeschobenen Hülsen versehen ist, die für eine geeignete Seitenführung der Träger beim Ein- und Ausfahren der Verlängerung Sorge tragen.

Weitere Einzelheiten der Erfindung werden anhand der Zeichnung erläutert, in der ein Ausführungsbeispiel der Erfindung dargestellt ist. Es zeigen :

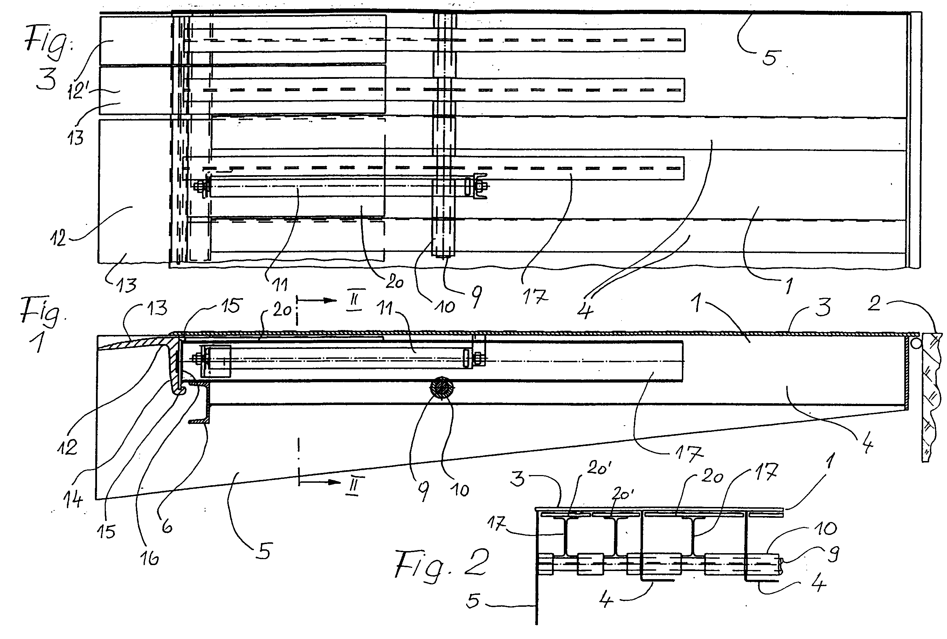

Fig. 1 eine in der Ruhestellung befindliche Überfahrbrücke im Längsschnitt,
Fig. 2 einen Teilschnitt nach der Linie II - II von Fig. 1,

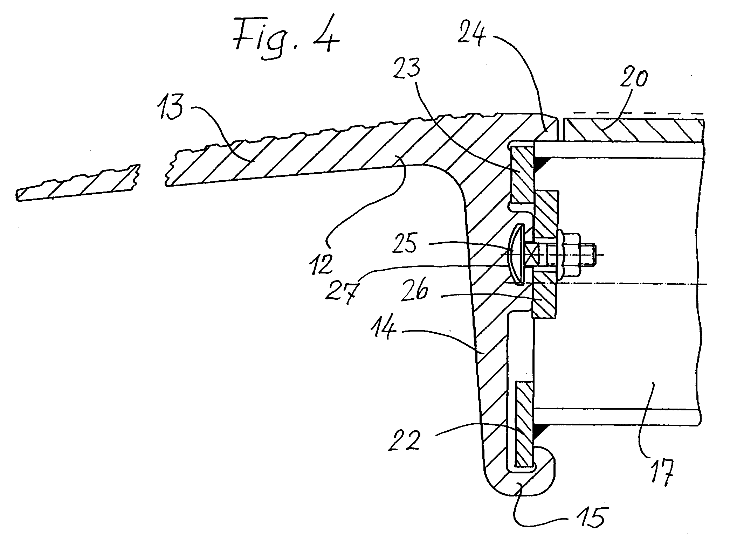

Fig. 3 die Brücke gemäss Fig. 1 in einer Teilunteransicht und
Fig. 4 eine Verlängerung und deren Befestigung für eine abgewandelte Überfahrbrücke im Längsschnitt.

Die Brückenplatte 1 ist an ihrem hinteren, rampenseitigen Ende um eine waagerechte Achse verschwenkbar und dort an der Rampe 2 gelagert, sie hat ein Deckblech 3 und darunter zur Aussteifung längs verlaufende L-förmige Unterzüge 4, die sich bis nahe an das vordere Plattenende erstrecken. An beiden Seiten wird die Brückenplatte 1 durch senkrechte Seitenbleche 5 abgeschlossen, die auch als Schutzbleche bestimmt sind.

Die Unterzüge 4 sind vorne über ihre Stirnfläche im unteren Bereich mit einem quer verlaufenden U-Träger 6 fest verbunden, dessen Enden mit den beiden Seitenblechen 5 in fester Verbindung stehen. Die beiden Schenkel des U-Trägers 6 zeigen nach vorne; die Unterzüge 4 liegen also mit ihrer Stirnfläche satt an dem Rücken des U-Trägers 6 an. Im Abstand hinter dem U-Träger 6 etwa auf einem Drittel der Brückenlänge ( von vorne gesehen ) ist im unteren Bereich der Unterzüge 4 eine weitere Querverbindung vorgesehen, und zwar eine Rundstange 9, die die einzelnen Unterzüge 4 durchsetzt mit ihnen verbunden und schliesslich auch mit ihren Enden an den Seitenblechen 5 befestigt ist. Auf diese Rundstange 9 ist eine grössere Anzahl Buchsen 1o aufgeschoben, die eine noch nachstehend zu erläuternde Bedeutung haben.

Die Brückenplatte 1 weist eine ein- und ausfahrbare, in Brückenlängsrichtung durch einen Arbeitszylinder 11 bewegbare Verlängerung 12 auf, deren zur Auflage auf der zu Be- oder Entladung vorgesehene Plattform bestimmtes Auflageteil 13 etwa in der Brückenebene liegt und dessen hinten gelegener Schenkel 14 etwa senkrecht verläuft und im allgemeinen als Anschlag dienen kann. Die Verlängerung 12 ist als Strangpresskörper aus Aluminium od. dgl ausgeführt und weist an den beiden Enden des Schenkels 14 nach hinten gerichtete Krallen 15 auf, die den Rand eines senkrechten Flachstahles 16 umschliessen, um so eine Befestigung der Verlängerung 12 an diesem Flachstahl 16 herbeizuführen. An der Rückseite des Flachstahles 16 sind über die Brückenbreite verteilte, sich in Brückenlängsrichtung erstreckende, einander parallele Träger 17 fest verankert, die sich am vorderen Ende auf dem U-Träger 6 abstützen und etwa auf halber Länge auf der Rundstange 9 ihr Widerlager finden. Damit jedoch die Träger 17 ihre Parallelstellung beibehalten, sind je zu beiden Seiten die bereits erwähnten Buchsen 10 vorgesehen, die also Distanzstücke gegenüber den benachbarten Elementen z.B. gegenüber den Unterzügen 4 bilden.

Die Arbeitszylinder 11 sind im übrigen am hinteren Ende mit dem Deckblech 3 verbunden und greifen vorne an der Verlängerung 12 an, um so die Verlängerung 12 ausfahren bzw. nach dem Brückenbetrieb wieder in die Stellung gemäss Zeichnung zurückfahren zu können.

Es versteht sich, dass der Brückenplatte 1 noch ein Hub- oder Schwenkzylinder zugeordnet ist, der in bekannter Weise auch in Zwillingsanordnung vorgesehen sein kann.

Wichtig ist, dass die den Schlitten für die Verlängerung 12 bildenden Träger 17 zusammen mit dem hochkant stehenden Flachstahl 16 als Baueinheit gefertigt werden können, auf die dann die Verlängerung 12 als Form- und Pressteil aufgeschoben werden kann.

Die Verlängerung 12 kann sich über die gesamte Breite der Brücke erstrecken; es sind aber auch Unterteilungen möglich z.B. die beiden dargestellten Abschnitte 12', denen je ein Träger 17 zugeordnet ist und jeweils auch ein Breitenabschnitt des Auflageteils 13.

Es sei noch erwähnt, dass sich in Verlängerung des Auflageteils 13 auf den Trägern 17 biegefeste Platten 20 befinden, die fest mit den Trägern 17 verbunden sind, die Räume zwischen benachbarten Unterzügen 4 bzw. einem Unterzug 4 und dem benachbarten Seitenblech 5 ausfüllen und einen entsprechenden Ausschub der Verlängerung 12 ermöglichen. Die Verlängerung 12 kann also so weit ausgefahren werden, dass das hintere Ende der Platten 20 an das vordere Ende des Deckbleches 3 gelangt. Sind Abschnitte 12' vorgesehen, so müssen entsprechende Plattenabschnitte 20' auf den zugehörigen Trägern 17 befestigt sein

Eine grosse Festigkeit der Brückenplatte 1 ergibt sich auch dadurch, dass die Unterzüge bis an das vordere Ende des Deckbleches 3 verlegt werden können.

Bei der Ausführung gemäss Fig. 4 weist der Schenkel 14 nur an seinem unteren Ende eine Kralle 15 auf. Sie umschliesst den unteren Rand eines Flachstahls 22, der an der Stirnseite der Träger 17 angeschweisst ist. Am oberen Rand der Träger 17 ist ein weiterer Flachstahl 23 angeschweisst, der jedoch nur als Widerlager für den Schenkel 14 dient. Im übrigen hat das Auflageteil 13 noch eine nach hinten vorspringende Nase 24, die vorne auf den Trägern 17 aufliegt und den Flachstahl 23 überdeckt. Um die Verlängerung 12 gegen seitliches Verschieben zu sichern, ist der Schenkel 14 mit Hilfe einer Schraube 25 an einem Flacheisen 26 angeschraubt, das ebenfalls mit den Trägern 17 fest verbunden ist. Durch Lösen der Schraube 25 kann im übrigen die Verlängerung 12 durch ein Abziehen zur Seite hin entfernt und ggfs. ausgetauscht werden, dazu kann der Kopf der Schraube 25 in einer Längsnut 27 des Schenkels 14 angeordnet sein. Die Schraube 25 hat im übrigen nur die Aufgabe, ein ungewolltes Abkippen der Verlängerung 12 zu vermeiden.

## Patentansprüche

1. Überfahrbrücke für Rampen mit einer rampenseitig um eine waagerechte Achse an der Rampe (2) schwenkbar gelagerten Brückenplatte (1) mit einer am freien Ende angeordneten, in Brückenlängsrichtung bewegbaren, ein- und ausfahrbaren Verlängerung (12) zur Auflage auf dem zu be- bzw. entladenden Fahrzeug, deren am hinteren Ende der Verlängerung (12) befindlicher etwa senkrechter Schenkel (14) am vorderen Ende von in einer Vielzahl vorgesehenen, sich längs zur Brücke erstreckenden, einander paralellen, zusammen mit der Verlängerung (12) längs bewegbaren Trägern (17) befestigt ist, dadurch gekennzeichnet, dass der senkrechte Schenkel (14) der Verlängerung (12) den unteren Rand einer an der Stirnseite der Träger (17) befestigten, senkrechten Platte (Flachstahl 16, 22) krallenartig umschliesst.

2. Brücke nach Anspruch 1, dadurch gekennzeichnet, dass der senkrechte Schenkel (14) den oberen und unteren Rand einer gegebenfalls aus übereinander angeordneten Abschnitten bestehenden Platte (16) krallenartig umschliesst.

3. Brücke nach Anspruch 1 - 3, dadurch gekennzeichnet, dass die Verlängerung (12) ein Strangpresskörper ist und die Kralle(n) (15) ein bzw. zwei bogenförmige Ansätze am senkrechten Schenkel (14) sind.

4. Brücke nach Anspruch 1, dadurch gekennzeichnet, dass der vordere Teil der Träger (17) Platten (20) trägt, deren Breite im wesentlichen dem gegenseitigen Abstand der die Versteifung der Brückenplatte (1) dienenden Unterzüge (4) bzw. dem Abstand zwischen einem Unterzug und einem Seitenblech der Brückenplatte (1) entspricht, wobei diese Platten an die Verlängerung (12) anschliessen.

5. Brücke nach Anspruch 1, dadurch gekennzeichnet, dass sich die hinteren Enden der Träger (17) auf einer sich quer über die Brücke erstreckenden Stange (9) abstützt, die mit den Unterzügen (4) und den Seitenblechen (5) der Brückenplatte (1) fest verbunden ist und aufgeschobene Hülsen (10) aufweist, die der Seitenführung der Träger (17) dienen.

6. Brücke nach Anspruch 1 - 3, dadurch gekennzeichnet, dass die Verlängerung (12) auf die Platte (16) durch eine Bewegung quer zur Brückenlängsrichtung aufschiebbar ist.

7. Brücke nach Anspruch 1, dadurch gekennzeichnet, dass sich die die Brückenplatte (1) versteifenden Unterzüge (4) bis an das vordere Ende der Brückenplatte (1) erstrecken und am vorderen Ende mit einem quer verlaufenden Träger (6) fest verbunden sind, dessen Enden mit den Seitenblechen (5) der Brückenplatte (1) in fester Verbindung stehen.

8. Brücke nach Anspruch 1, dadurch gekennzeichnet, dass der senkrechte Schenkel (14) der Verlängerung (12) durch eine Verschraubung befestigt und die Verlängerung (12) nach Lösen der Verschraubung entfernbar ist.

9. Brücke nach Anspruch 1, dadurch gekennzeichnet, dass im Bereich des oberen Randes der Träger (17) die Verlängerung (12) mit ihrer Rückseite an der Stirnseite der Träger (17) bzw. einer hier befestigten Platte ( Flachstahl 23 ) anliegt.

10. Brücke nach Anspruch 1, dadurch gekennzeichnet, dass der Auflageteil (13) der Verlängerung (12) eine nach hinten vorspringende Nase (24) aufweist, die das vordere Ende der Träger (17) überdeckt und hier vorzugsweise aufliegt.

## Claims

1. Transfer bridge for platforms, having a bridge plate (1) which is pivotably mounted on the platform (2) at its platform end about a horizontal axis, said bridge plate being provided with a retractable and extendable extension member (12), which is disposed at its free end and is displaceable in the longitudinal direction of the bridge, for support on a vehicle to be loaded or unloaded, a substantially vertical portion (14) of said extension member being situated at the rear end of the extension member (12) and being mounted at the front end of carriers (17), which are provided in a plurality, extend longitudinally relative to the bridge, lie parallel to one another and are longitudinally displaceable together with the extension member (12), characterised in that the vertical portion (14) of the extension member (12) surrounds the lower edge of a vertical plate (flat steel plate 16, 22) in a claw-like manner, said plate being mounted on the end face of the carriers (17).

2. Bridge according to claim 1, characterised in that the vertical portion (14) surrounds the upper and lower edges of a plate (16) in a claw-like manner, said plate possibly comprising sections which are disposed above one another.

3. Bridge according to claims 1 - 2, characterised in that the extension member (12) is an extruded body, and the claw (15) is one arcuate attachment, or respectively the claws (15) are two arcuate attachments, on the vertical portion (14).

4. Bridge according to claim 1, characterised in that the front part of the carriers (17) carries plates (20), the width of which plates corresponds substantially to the mutual spacing between the supports (4), which serve to reinforce the bridge plate (1), or respectively corresponds to the spacing between a support and a lateral sheet/side panel of the bridge plate (1), these plates communicating with the extension member (12).

5. Bridge according to claim 1, characterised in that the rear ends of the carriers (17) are supported on a rod (9), which extends transversely over the bridge and is firmly connected to the supports (4) and the lateral sheets (5) of the bridge plate (1), said rod having sleeves (10), which are slipped thereover and serve to guide the carriers (17) laterally.

6. Bridge according to claims 1 - 3, characterised in that the extension member (12) can be slipped over the plate (16) as a result of a movement transversely relative to the longitudinal direction of the bridge.

7. Bridge according to claim 1, characterised in that the supports (4), which reinforce the bridge plate (1), extend to the front end of the bridge plate (1) and are firmly connected at the front end to a transversely extending carrier (6), the ends of which carrier are firmly connected to the lateral sheets (5) of the bridge plate (1).

8. Bridge according to claim 1, characterised in that the vertical portion (14) of the extension member (12) is mounted by means of a screw connection, and the extension member (12) is removable once the screw connection has been released.

9. Bridge according to claim 1, characterised in that the extension member (12) abuts with its rear side against the end face of the carriers (17), or respectively a plate mounted here (flat steel plate 23), in the region of the upper edge of the carriers (17).

10. Bridge according to claim 1, characterised in that the supporting part (13) of the extension member (12) has a rearwardly protruding projection (24), which covers the front end of the carriers (17) and preferably is supported here.

## Revendications

1. Niveleur de quai comportant un tablier (1) monté basculant du côté quai autour d'un axe horizontal contre le quai (2), et présentant à l'extrémité libre un prolongement (12) pouvant être sorti et rentré, mobile dans le sens longitudinal du niveleur, et destiné à venir s'appuyer sur le véhicule à charger ou à décharger, la branche (14) à peu près verticale située à l'extrémité arrière, du prolongement (12), étant fixée à l'extrémité avant de poutres (17), prévues en une pluralité, parallèles entre elles, s'étendant dans le sens longitudinal par rapport au niveleur, et mobiles dans le sens longitudinal en même temps que le prolongement (12), caractérisé par le fait que la branche verticale (14) du prolongement (12) entoure à la manière d'une griffe le bord inférieur d'un plateau vertical (acier plat 16, 22) fixé à la face frontale des poutres (17).

2. Niveleur de quai selon la revendication 1, caractérisé par le fait que la branche verticale (14) entoure à la manière d'une griffe le bord supérieur et le bord inférieur d'un plateau (16), consistant le cas échéant en des tronçons superposés.

3. Niveleur de quai selon la revendication 1 ou 2, caractérisé par le fait que le prolongement (12) est une pièce profilée filée et que la ou les griffes (15) est ou sont une, ou respectivement deux, rebord(s) en forme d'arc sur la branche verticale (14).

4. Niveleur de quai selon la revendication 1, caractérisé par le fait que la partie avant des poutres (17) porte des plateaux (20), dont la largeur correspond sensiblement à l'écartement mutuel des sous-poutrelles (4) servant au raidissement du tablier (1), ou bien à l'écartement entre une sous-poutrelle et une tôle latérale du tablier (1), ces plateaux faisant suite au prolongement (12).

5. Niveleur de quai selon la revendication 1, caractérisé par le fait que les extrémités arrière des poutres (17) s'appuient sur une barre (9) qui s'étend transversalement au niveleur, qui est solidement reliée aux sous-poutrelles (4) et aux tôles latérales (5) du tablier (1) et qui présente des douilles (10) enfilées sur elle pour servir de guidage latéral aux poutres (17).

6. Niveleur de quai selon les revendications 1 à 3, caractérisé par le fait que le prolongement (12) peut être poussée sur le plateau (16) par un mouvement transversal au sens longitudinal du niveleur de quai.

7. Niveleur de quai selon la revendication 1, caractérisé par le fait que les sous-poutrelles (4) renforçant le tablier (1) s'étendent jusqu'à l'extrémité avant du tablier (1) et sont solidement reliées par l'extrémité avant à une poutre (6) qui s'étend transversalement et dont les extrémités sont fermement reliées aux tôles latérales (5) du tablier (1).

8. Niveleur de quai selon la revendication 1, caractérisé par le fait que la branche verticale (14) du prolongement (12) est fixée par vissage et que, après desserrage de la vis, le prolongement (12) peut être retiré.

9. Niveleur de quai selon la revendication 1, caractérisé par le fait que dans la zone du bord supérieur des poutres (17), le prolongement (12) est appliqué par son côté arrière à la face des poutres (17), ou bien à un plateau (acier plat 23) qui y est fixé.

10. Niveleur de quai selon la revendication 1, caractérisé par le fait que la partie portante (13) du prolongement (12) présente un talon (24) qui fait saillie vers l'arrière, qui recouvre l'extrémité avant des poutres (17) et qui, de préférence, s'y appuie.
